# EUROPEAN PATENT SPECIFICATION

(11) **EP 0 987 918 B1**
(45) Date of publication and mention of the grant of the patent: **03.11.2010**
(21) Application number: 98480065.6
(22) Date of filing: 16.09.1998
(51) Int. Cl.: H04Q 11/04, H04L 12/56

(54) **Method and apparatus for generating and checking a data check field**
Verfahren und Vorrichtung zur Erzeugung und Prüfung vom Datenprüffeld
Procédé et apparail pour la création et vérification d'un champ de vérification de données

(43) Date of publication of application: 22.03.2000
(73) Proprietor: International Business Machines Corporation, Armonk, NY 10504 (US)
(72) Inventor: Glaise, René, 06000 Nice (FR); Poret, Michel, 06510 Gattières (FR)
(74) Representative: Bell, Mark

(56) References cited:
- US-A- 5 768 274
- GLAISE R: IBM J. RES. DEV., vol. 41, no. 6, November 1997, pages 705-709, XP002094272 usa
- GLAISE R ET AL: PROC. IEEE INT. CONF. ON COMPUTER DESIGN,October 1993, pages 602-605, XP002094273 USA

## Description

### Field of the Invention

This invention relates to fixed-length packet or cell connection oriented communication networks and, more particularily, to a method for generating and checking a data check field appended to packets or cells so as both contents of cells and cell sequencing, for each virtual connection, are checkable from this single check field.

### Background Art

With the deployement of optical fibers, permitting to implement very high rate data communication networks, the technique of switching fixed-length packets or cells, to direct information towards the end user at network nodes is recognized as the best means to take advantage of the fiber performances. All the nodes on the network are connected via one or more switches which route the cells to their various destinations. Because of the fixed cell length, this can be carried out simultaneously for a large number of cells. Thus, the stations on the network do not share a common transfer medium, as is the case in local networks, but hand over their cells at the switches.

Switches connect a number of communication links receiving cells with others transmitting them. These links, while logically separate, are paired such that one inbound and one outbound connection are joined to form a full-duplex physical link tied to a switch port. Cells are received by the switch and retransmitted on one of the outbound links according to the routing rules of the protocol in use within the network for instance Asynchronous Transfer Mode (ATM).

The core of the switching process, such as it is defined for ATM, is as follows:
1.A cell is received on an inbound link and its header is examined to determine on which outbound link it must be forwarded.
2.The header is changed to new values appropriate to the outbound link.
3.The cell is retransmitted towards its destination on an outbound link.
4.During this process the system is constrained to deliver cells to the appropriate output port *in the same sequence* as they arrive.
This applies to each virtual connection carried on the same physical link.

Although switches could conceptually use the ATM header to route the cells they are not generally ATM switch per se. For the sake of simplicity and to accomodate different applications the route that a cell is to follow through the switching fabric is preferably specified by a routing vector or tag prepended to the cell itself. Routing tag is added by the inbound port adapter and is used by the switch to determine to which output port or ports, in case of multicasting, the cell is routed to. Then, the cell is sent to the outbound adapter which removes the routing tag before it is transmitted to a remote location on the appropriate link.

Also, to guarantee user data integrity during switching operation, a check field computed on the cell contents is appended to it so as output port adapter is able to verify that the cell has not been altered while moving through the switch fabric. Usually this check field is a standard Cyclic Redundancy Check (CRC), best fitted to detect errors. It is, like the routing tag, removed by the output adapter before the cell is transmitted.

In short, inbound switch adapter adds a routing tag in front of the cell and appends a check field at the end.

The routing tag carries all what is needed by the switch fabric to self-route the cell to the output port. Outbound adapter checks the cell for integrity and removes both the check field and the routing tag before the process of transporting the information towards the next node is undertaken within the outbound adapter.

All of this and much more on switching and ATM can be found in "Asynchronous Transfer Mode (ATM), Technical Overview" a publication by the IBM International Technical Support Organization, reference SG24-4625, dated October 1995.

The hereabove process works well and allows to detect switch fabric permanent and intermittent hardware problems and internal failures so as they can be isolated for scheduled maintenance and repair or failing device automatically deactivated if a redundant scheme is implemented, for a non disruptive mode of operation, as it is often a requirement for communication networks that are assumed to operate 24 hours a day.

Process for ATM cell integrity checking using CRC computation is for example part of the cell delineation control unit (4) of a cell multiplexer described in the US patent 5,768,274 assigned to Hitachi.

However, due to the statistical nature of the traffic or just because too much data is permanently flowing towards a particular node or converge on the same output port for a significant period of time, congestion may occur. The behaviour is highly dependent on how switches are designed. However, the end result is that cell discarding may occur occasionally when internal queues or buffers are overflowing. Also because of design flaws in the hardware or software controlling switches, cell disordering may occur as well under stressing conditions. Cell discarding and disordering are not going to be detected by the check field either because the cell destined to a particular adapter is not at all received or because a cell is duplicated or misdirected having however, a good check field, which goes unnoticed. Although this is detected by the end to end higher-layer protocols, it does not help locating the failure since several nodes are generally involved and is not convenient anyway because those going to be detected by the check field either because the cell destined to a particular adapter is not at all received or because a cell is duplicated or misdirected having however, a good check field, which goes unnoticed. Although this is detected by the end to end higher-layer protocols, it does not help locating the failure since several nodes are generally involved and is not convenient anyway because those higher-level protocols deal with the user information and have nothing to do with the network management and maintenance.

The traditional way of handling the detection of missing, or disordered cells is to have a sequence number added. The obvious drawback of this method is that an extra field is necessary to transport the information, i.e. even more overhead is required on top of the useful limited amount of user information transported by a single cell namely 48 bytes if cell-switch is moving true ATM cells or ATM-like cells. An example of the use of an extra field is the Adaptation Layer 1 of ATM (also described in the "Technical Overview" previously mentioned) which deals with the transport of constant-bit-rate traffic such as digitized voice. Being faced with the similar problem of having to number cells this was solved by borrowing one byte of the payload to carry a counter along with its own protection. Thus, reducing accordingly the available payload from its regular 48-byte format to a weird 47-byte useful payload which does not help data manipulation in the various temporary buffers, FIFO's and queues generally required in switch adapters.

In the general case other protocols than ATM need to be handled. Then, cells going through the switch may also be the result of the segmentation of messages received by the inbound adapter to accomodate the switch mode of operation. In which cases it is as well important to preserve cell sequencing so as to permit a proper re-assembling of messages in the outbound adapter or at final destination.

Therefore, it is a first object of the invention to provide a method for generating and checking of a data check field to be appended to each fixed length packet in a connection oriented packet network said check field being used for detecting cell content alterations as well as cell sequencing impairments.

It is a second object of the invention to achieve this dual level of detection within a minimum check field length while maintaining all detection capabilities of a CRC check field.

### Summary of the Invention

The invention first discloses a method for generating a check field appended to fixed-size packets in a connection oriented data communications network providing for subsequent detection of alterations to the field protected in said packet, retaining all properties associated to the particular generator polynomial in use for performing a Cyclic Redundancy Check (CRC), while adding the capability of detecting, within a sequence of such fixed-size packets pertaining to the same connection, all cell sequencing disorderings, said method being characterized in that it comprises the steps of :
- performing, over the field to be protected of each packet, a regular CRC calculation thus, obtaining a first initial value for the check field to be appended to said packet;
- incrementing a packet connection counter for each new processed packet, said counter counting modulo a value less than or equal to the power of two corresponding to the degree of the generator polynomial used to compute said CRC;
- modifying said first initial value of the check field by adding, modulo two, the current value of said packet connection counter thus obtaining the final value of said check field;
- appending the final value of the check field to said packet;

The invention then discloses a method for checking a check field appended to fixed-sized packets in a connection oriented data communications network permitting to detect alterations to the field protected in said packet and all cell sequencing disorderings, allowing to obtain a checking result and an offset, said method characterized in that it comprises the steps of :
- performing, over the protected field of each packet, including the check field, a CRC calculation thus, obtaining a checking result;
- incrementing a packet connection counter for each new processed packet, said counter counting modulo a value less than or equal to the power of two corresponding to the degree of the polynomial used to compute said CRC;
   ◆ comparing said checking result to the current value of said packet connection counter thus, obtaining an offset:
      ◆ if offset is null:
         declare that current said packet contents has not been altered and that all packets have been received in sequence up to that point;
      ◆ if not:
         declares immediatly that a fault has been detected for the current connection;

The method of the invention turns a regular CRC field into a composite check field from which it is not only possible to detect errors within the field over which it is calculated but where successive calculations on independent unnumbered entities, the packets, are sequentially offset so as checking may also detects any form of disordering in the packet delivery uncluding lost, replicated or misdirected packets.

The invention also discloses an apparatus comprising means for implementing the steps of the method disclosed in the present invention.

### Brief Description of the Drawings

- **Figure 1**: depicts a cell having a routing tag and a check field appended for transmission through a switch
- **Figure 2**: depicts a switch fabric establishing a virtual connection between an inbound and outbound link
- **Figure 3**: illustrates the logical blocks of the apparatus merging a virtual connection cell counter with a regular CRC check field and its checking counterpart according to the present invention
- **Figure 4**: shows various cell contents and sequence impairments detected by the outbound adapter
- **Figure 5**: is the flow chart of how outbound adapter analyses the cells received from the switch and determines cell sequencing disorders

### Detailed Description of the Preferred Embodiment

Although the preferred embodiment of the invention specifically applies to high-speed cell switches needed at nodes of high performance networks particularily those implementing optical fibers in order to achieve the necessary throughput it would be understood by those skilled in the art that the methods and apparatus of the invention apply also to any connection oriented data fixed-length packet network using a data check field appended to each packet and having a need for packet sequencing checking. The methods for generating and checking may be respectively implemented at input and output of any subportion of a connection path in the network wherein data is checked: they could be respectively implemented in the inbound and outbound adapters of a switching node or for instance, in the end point nodes of the connection.

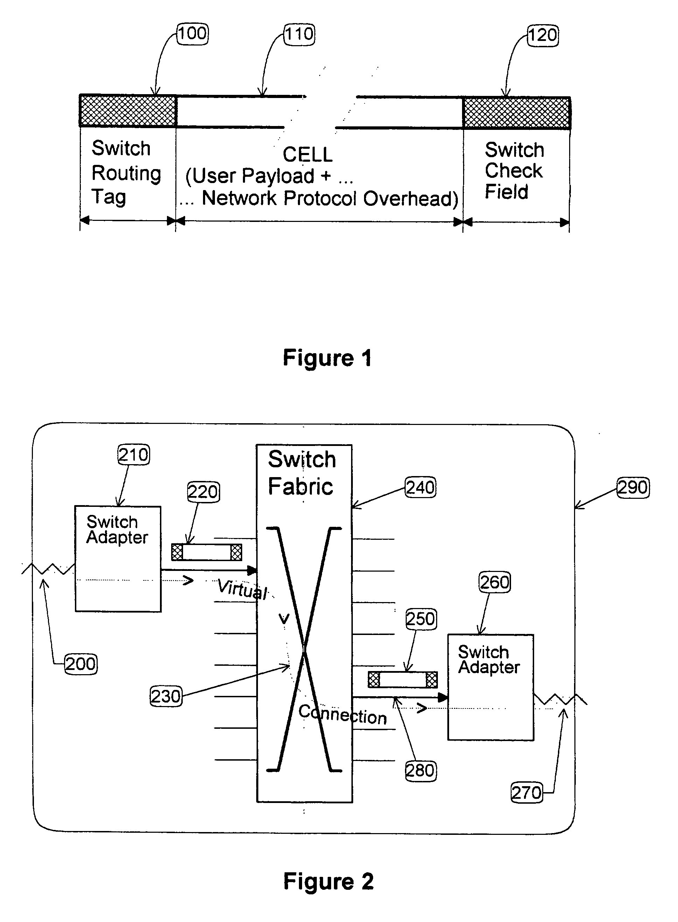

**Figure 1** depicts a cell [110] that has been formated by the inbound adapter for traversing a cell-switch fabric. Routing tag [100] is prepended so as cell may be steered towards the right output port i.e. the one through which the virtual connection to which cell belongs must exit the switch fabric. Checking field [120], according to the present invention, is appended to cells in order to permit a full checking of the switching process i.e not only allowing to detect possible cell alterations but also all sorts of cell sequencing violations. Checking field calculation may or not encompasses the routing tag itself depending upon the particular switch design which may need or not to alter the routing tag on its way towards the output port.

**Figure 2** illustrates a node in a communications network more particularily showing a virtual connection [230] transported over an inbound link [200] to an inbound switch adapter [210] aimed at adapting the particular transport protocol in use over said link and capable of delivering cells [220], whose format is described in Figure 1, so as switch fabric [240] may direct them to the right output port [280] thus, reaching outbound switch adapter [260] in which cells [250] are checked and eventually sent over outbound link [270] after the corresponding link transport protocol has been accomodated by said adapter.

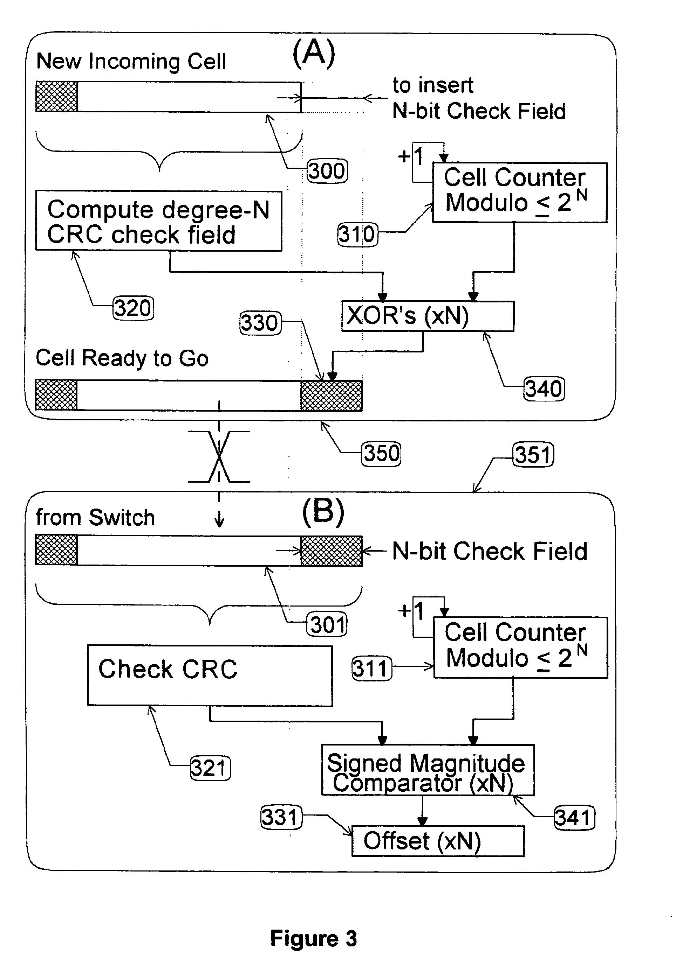

**Figure 3** shows, in upper part A, the logical blocks of the apparatus for generationg the check field to be appended to a cell of an ordered, though unnumbered, series of cells pertaining to the same virtual connection and, in lower part B, the logical blocks for checking it, according to the invention.
A. Each new incoming cell, received as is or resulting of the segmentation of longer messages moving to adapter [210] through the incoming link [200] as shown in previous figure 2, to which a routing tag has first been prepended for the purpose of being routed through the switch [240], is temporarily stored in storage means [300] such that a later insertion of the check field is possible. A regular Cyclic Redundancy Check (CRC) calculation is then performed by any appropriate means [320], known of the art, and based on a generator polynomial having a degree and more generally properties to discover all errors that may occur within cell contents when manipulated by the switch. Also, each time a new cell is processed, for a given virtual connection, a cell counter [310] is incremented. Said counter runs modulo a value compatible with the degree of the hereabove chosen generator polynomial such that its value, added modulo 2 by the bunch of XORs [340], cannot be larger than the result of said CRC calculation done by means [320]. Then, result of said addition, temporarily stored in register [330], is the final value of the check field which, when appended to cell stored in [300], complete cell formatting thus, becoming ready to be processed by the switch.
B. Similarly, each cell delivered by the switch to the outbound adapter [260] triggers, on one hand, the incrementation of the cell counter [311], for the virtual connection to which cell belongs while, on the other hand, it is temporarily stored in storage means [301] from which a regular CRC calculation is performed by means [321], known of the art, result of which is applied for comparison with the current value of the cell counter [311] to a signed comparator [341]. Result of the checking [331], referred to as the offset, if not null, is indicative of an error that is further analyzed when more cells are received for the current connection.

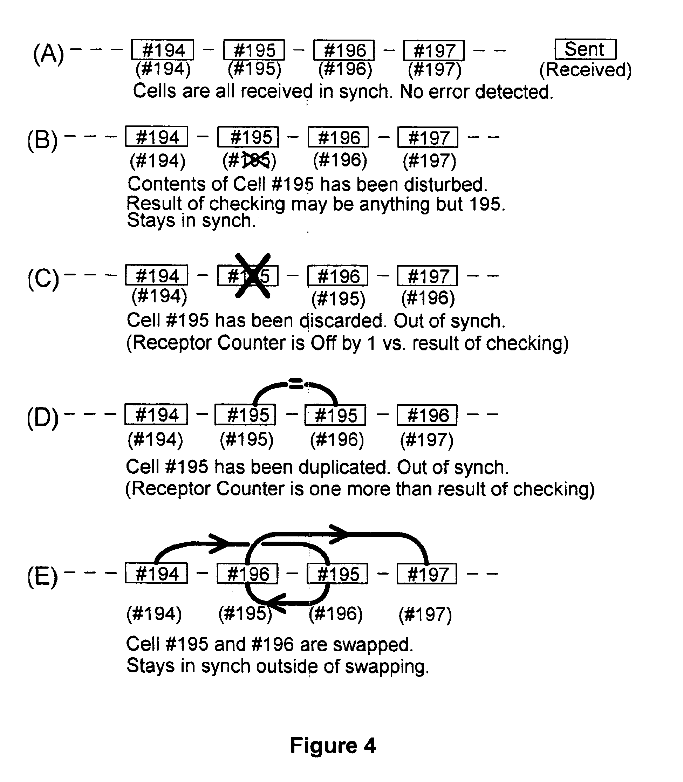

**Figure 4** depicts five situations recognized by the outbound adapter which checks cells to which check fields, as described in previous figure 3, have been appended. Although they are not limitative of what is detectable by the receptor the 5 examples are the basic situations of which all others, more complex, can be derived;
A. is the normal case in which no error is occurring and where cell counters of inbound and outbound adapters are synchronized. This might also be the case of too many errors that would affect the contents of a cell thus, being beyond the detection capability of the CRC. This latter situation, unavoidable because any CRC has error detection limitations, is considered as very unlikely under nominal conditions for which CRC must have been chosen.
B. depicts the case of an error affecting the contents of a cell (including the check field itself) thus detected by the outbound adapter. In which case the result of the checking can be anything but the current value of the outbound cell counter. A fault is immediatly detected and the observation of subsequent received cells, in synch, permits to conclude that only the contents of this cell was affected.
C. shows the case where a cell has been discarded or has been misdirected by the switch. The end result is that a cell is skipped in what is received by outbound adapter for that virtual connection in which case sequence is broken. Outbound cell counter is then permanently off by a value corresponding to the number of discarded or misdirected cells. Eventually, outbound cell counter needs to be resynchronized when situation has been recognized and acted on accordingly by the device in charge of managing the adapter.
D. pictures the case of a replicated cell or the one of a cell which has been misdirected thus, inserted in a virtual connection to which it does not actually belong. Similarly to what happened in (C) outbound cell counter acquires a permanent positive offset after the extra cell(s) has(ve) been received. Like in (C) outbound cell counter needs to be resynchronized when situation has been recognized and acted on accordingly by the device in charge of managing the adapter.
E. illustrates the situation where two cells have been swapped which is the simplest form of series of cells the switch would deliver in the wrong order. Like with all the other errored cases i.e. (B), (C) and (D) a fault is immediatly detected and may be reported. Deciding that cells are unordered while their contents is unaffected requires that the sequence be further analyzed to make this case apart from (B). Depending on which level of sophistication the error detection needs to be for fitting a particular application it may not be required to distinguish between the two error cases eventhough it is easy to see that the difference is that in (E) no replication of a sequence number is observed during the disturbed window while in (B) sequence numbers are replicated and others missing.

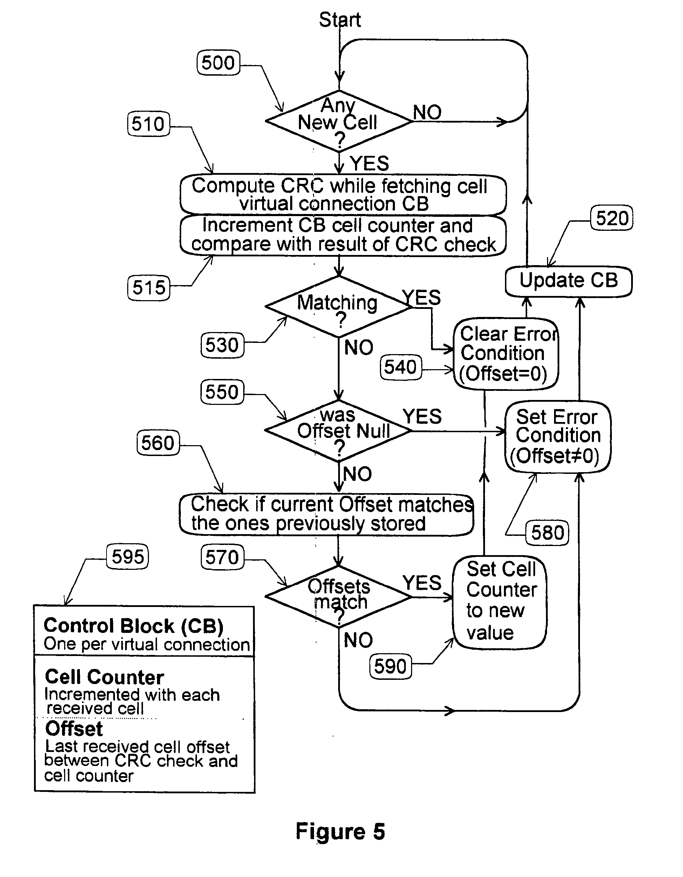

**Figure 5** is just one example of how outbound adapter may take advantage of the check field to check each virtual connection. More sophisticated algorithms are possible which would permit to sort out all error cases without however improving the overall error detection level. Error detection process starts at step [500] where outbound adapter [260] continuously checks for new incoming cells. Whenever a new cell is received CRC calculation is undertaken immediatly at step [510] thus, eventually obtaining a check field. While calculation is performed the control block (CB) associated to the virtual connection to which cell belongs is fetched. When both result of calculation and fetched CB are ready, a comparison is made between the Cell Counter field extracted from Control Block [595] and incremented by 1 with the just received cell check field result. They should agree. This is the normal situation, no error has occured, the offset is null. Then, the error condition if cleared at step [540] (eventhough, most of the time, this is not necessary) and CB updated with a null offset and a new incremented value of the cell counter for that connection after which process resumes at step [500]. If however, result of comparison [530] indicates there is a mismatch the previous offset value from the fetched control block must be tested. If result of test [550] indicates that the offset was previously null this is the clear indication that an error situation has been entered. This is set at step [580] and CB updated at step [520] with the current observed value of the offset along with the incremented cell counter value. Process resume at step [500] waiting for a next cell. If the offset was not null this is the indication that an error condition is in effect in which case offsets must be further tested at step [560]. If result of comparing current and previous offsets at step [570] shows that they are identical this indicates that either some cell(s) were received or discarded (sign of offset says which one applies) but that situation has returned to normal. In which case cell counter must be updated to its new observed value [590] and error condition cleared with offset reset to 0 at step [540] after which connection CB is updated. It must be noticed here that this algorithm is self cleaning at initialization. If error reporting may be ignored for the first cells of a new established virtual connection the just described mechanism will automatically reset the CB with no need to implement an initialization procedure.
Finally, if error condition is set and offsets still do not match at step [570] this is indicative of an error window in progress. Then, the error must be maintained at step [580] and CB updated with the new observed offset and incremented cell counter.
In summary, an error situation is entered as soon as CRC checking and incremented (fetched) cell counter no longer match while error condition is cleared as soon as they are matching again or if the offset is no longer changing.

## Claims

1. A method for generating a check field (120) appended to fixed-size packets (110) in a connection oriented data communications network providing for subsequent detection of alterations to the field protected in said packet, retaining all properties associated to the particular generator polynomial in use for performing a Cyclic Redundancy Check, CRC, while adding the capability of detecting, within a sequence of such fixed-size packets pertaining to the same connection (230), packet sequencing disorderings, said method comprising the step of :
a. performing, over the field to be protected of each packet, a CRC calculation (320) thus, obtaining a first initial value for the check field to be appended to said packet; said method being **characterized in that** it further comprises the steps of :
b. incrementing a packet connection counter (310) for each new processed packet, said counter counting modulo a value less than or equal to 2^{N}, wherein N corresponds to the degree of the generator polynomial used to compute said CRC;
c. modifying said first initial value of the check field by adding, modulo two (340), the current value of said packet connection counter thus obtaining the final value of said check field (330);
d. appending the final value of the check field to said packet.

2. A method for checking a check field appended to fixed-sized packets in a connection oriented data communications network permitting to detect alterations to the field protected in said packet and all packet sequencing disorders, allowing to obtain a checking result and an offset, said method
comprising the step of :
e. performing, over the protected field of each packet (301), including the check field, a CRC calculation (321) thus, obtaining a checking result; said method being **characterized in that** it further comprises the steps of:
f. incrementing a packet connection counter (311) for each new processed packet, said counter counting modulo a value less than or equal to 2^{N}, wherein N corresponds to the degree of the polynomial used to compute said CRC;
g. comparing (341) said checking result to the current value of said packet connection counter thus, obtaining an offset (331); and,
• if said offset is null:
declare that current said packet contents has not been altered and that all packets have been received in sequence up to that point;
• if not:
declare immediately that a fault has been detected for the current connection.

3. The method of claim 2 for further determining the type of detected errors, when an error situation is entered and how it is cleared based on the sole observation of said offset obtained on successive packets, said method comprising the steps of :
h. storing a Control Block, CB, (595) per virtual connection remembering the values of said packet counter and offset;
i. fetching (510) the corresponding CB each time a new packet is received for a given connection;
j. incrementing (515) the CB packet counter;
k. comparing (530) the result of CRC checking performed on the new packet with the result of the incremented CB packet counter;
1. if matching:
report that no error has occured or has just ended then, clear error reporting (540) if set and store back CB (520) with new packet counter value and a null offset;
m. if not:
check (550) the CB previous offset value:
➢ if null, report (580) that an error situation has just been entered and store back the CB (520) with the incremented packet counter value and offset;
➢ if not, compare (560) the CB previous offset and the current value:
• if different, decide that an error situation is in progress, store back the CB (520) with the new values (580) for the packet counter and the offset;
• if however equal (590) decide that an error situation has just cleared in which case sign and value of the offset says how many packets have been lost or replicated, clear error reporting (540) and update the CB (520) with a null offset and a packet counter reset to the new observed value.

4. The method of claim 2 and 3 for further analyzing errors detected when leaving the error situation at step 1 of claim 2, in order to distinguish between packet contents errors and packets that are delivered out of sequence, said method comprising the steps of:
a. remembering all packet numbers found during the error window thus, recording a set of sequence numbers while an error situation is reported;
b. observing, at exit of error window, if sequence is complete with no duplication nor missing number:
➢ if true:
declare that the packets were deliverd out of sequence;
➢ if false:
declare that packets contents was altered.

5. An apparatus (350) for generating a check field appended to fixed-sized packets in a connection oriented data communications network providing for subsequent detection of alterations to the field protected in said packets, retaining all properties associated to the particular generator polynomial in use for performing a Cyclic Redundancy Check, CRC, while adding the capability of detecting, within a sequence of such fixed-size packets pertaining to the same connection, packet sequencing disorderings, said apparatus comprising the following means:
a. means (300) for temporarily storing an incoming packet;
b. means (320) for computing from the packet protected field, a CRC check field;
c. means (310) for incrementing, each time an incoming packet is processed, a counter operating modulo a value not larger than two to the power of the degree of the generator polynomial used for computing said CRC;
d. means (340) for adding modulo 2 the value of said check field with the value of said incrementing means (310) thus obtaining the composite check field;
e. means (330) for temporarily storing said composite check field to be appended to said incoming packet.

6. An apparatus (351) for checking a check field appended to fixed-size packets in a connection oriented data communications network permitting to detect alterations to the field protected in said packets and all packet sequencing disorderings, allowing to obtain a checking result and an offset, said apparatus comprising the following means:
a. means (301) for temporarily storing a new packet;
b. means (321) for computing from the packet protected field and composite check field a checking result;
c. means (311) for incrementing, each time a new packet is processed, a counter operating modulo a value not larger than two to the power of the degree of the polynomial used for computing said CRC;
d. means (341) for comparing the value of said checking result with the value of said incrementing means (311) thus obtaining an offset value;
e. means (331) for temporarily storing said offset from which all error conditions are derived.

## Patentansprüche

1. Verfahren zum Erzeugen eines Prüffelds (120), das in einem verbindungsorientierten Datenübertragungsnetzwerk an Pakete mit fester Größe (110) angefügt wird und zum nachfolgenden Erkennen von Änderungen an dem Feld dient, das in dem Paket geschützt ist, wobei alle Eigenschaften, die mit dem bestimmten Erzeugerpolynom verbunden sind, das zum Ausführen einer zyklischen Redundanzprüfung CRC verwendet wird, beibehalten werden, während die Möglichkeit hinzugefügt wird, innerhalb einer Folge von derartigen Paketen mit fester Größe, die diese Verbindung (230) betreffen, Paketfolgestörungen zu erkennen, wobei das Verfahren den folgenden Schritt umfasst:
a. Ausführen einer CRC-Berechnung (320) an dem Feld, das von jedem Paket geschützt werden soll, um dadurch einen ersten Anfangswert für das Prüffeld, das an das Paket angefügt werden soll, zu erhalten;
wobei das Verfahren **dadurch gekennzeichnet ist, dass** es ferner die folgenden Schritte umfasst:
b. Erhöhen eines Paketverbindungszählers (310) für jedes neu verarbeitete Paket, wobei der Zähler einen Wert nach Modulo zählt, der kleiner als oder gleich 2^{N} ist, wobei N dem Grad des Erzeugungspolynoms, das zum Berechnen des CRC verwendet wird, entspricht;
c. Modifizieren des ersten Anfangswerts des Prüffelds durch Hinzufügen von Modulo-Zwei (340) zu dem gegenwärtigen Wert des Paketverbindungszählers, um dadurch den endgültigen Wert des Prüffelds (330) zu erhalten;
d. Anfügen des endgültigen Werts des Prüffelds an das Paket.

2. Verfahren zum Prüfen eines Prüffelds, das in einem verbindungsorientierten Datenübertragungsnetzwerk an Pakete mit fester Größe angefügt wird, wodurch ermöglicht wird, Änderungen an dem Feld, das in dem Paket geschützt ist, und alle Paketfolgestörungen zu erfassen, wodurch ein Prüfergebnis und ein Versatz-Wert erhalten werden können, wobei das Verfahren den folgenden Schritt umfasst:
e. Ausführen einer CRC-Berechnung (321) an dem geschützten Feld jedes Pakets (301), das das Prüffeld enthält, wodurch ein Prüfergebnis erhalten wird;
wobei das Verfahren **dadurch gekennzeichnet ist, dass** es ferner die folgenden Schritte umfasst:
f. Erhöhen eines Paketverbindungszählers (311) für jedes neu verarbeitete Paket, wobei der Zähler einen Wert nach Modulo zählt, der kleiner als oder gleich 2^{N} ist, wobei N dem Grad des Polynoms, das zum Berechnen des CRC verwendet wird, entspricht;
g. Vergleichen (341) des Prüfergebnisses mit dem gegenwärtigen Wert des Paketverbindungszählers, um dadurch einen Versatz-Wert (331) zu erhalten; und
• wenn der Versatz-Wert null ist:
Feststellen, dass der aktuelle Paketinhalt nicht verändert wurde und alle Pakete bis zu diesem Zeitpunkt in der Reihenfolge empfangen wurden;
• wenn das nicht der Fall ist:
sofort Feststellen, dass für die gegenwärtige Verbindung ein Fehler erkannt wurde.

3. Verfahren nach Anspruch 2, um des Weiteren den Typ der erkannten Fehler zu bestimmen, wenn eine Fehlersituation eingetreten ist, und wie diese anhand der alleinigen Beobachtung des Versatz-Wertes, der aus aufeinander folgenden Paketen erhalten wird, beseitigt wird, wobei das Verfahren die folgenden Schritte umfasst:
h. Speichern eines Steuerblocks CB (595) mittels einer virtuellen Verbindung, die sich auf die Werte des Paketzählers und des Versatz-Wertes bezieht;
i. Abrufen (510) des entsprechenden CB-Wertes immer dann, wenn bei einer gegebenen Verbindung ein neues Paket empfangen wird;
j. Erhöhen (515) des CB-Paketzählers;
k. Vergleichen (530) des Ergebnisses der CRC-Prüfung, die an dem neuen Paket ausgeführt wird, mit dem Ergebnis des erhöhten CB-Paketzählers;
1. bei Übereinstimmung:
Melden, dass kein Fehler aufgetreten ist oder dieser gerade beendet wurde, anschließend Löschen der Fehlermeldung (540), falls diese eingerichtet wurde, und Zurückspeichern des CB (520) mit dem neuen Paketzählerwert und einem Null-Versatz;
m. wenn das nicht der Fall ist:
Prüfen (550) des CB mit dem vorherigen Versatz-Wertes:
➢ wenn null, Melden (580), dass eine Fehlersituation gerade eingetreten ist, und Zurückspeichern des CB (520) mit dem erhöhten Paketzählerwert und dem Versatz-Wert;
➢ wenn das nicht der Fall ist, Vergleichen (560) des CB mit dem vorherigen Versatz-Wert mit dem gegenwärtigen Wert:
• wenn unterschiedlich, Entscheiden, dass eine Fehlersituation vorliegt, Zurückspeichern des CB (520) mit den neuen Werten (580) für den Paketzähler und den Versatz-Wert;
• wenn jedoch gleich (590), Entscheiden, dass eine Fehlersituation gerade gelöscht wurde, wobei in diesem Fall Vorzeichen und Wert des Versatz-Wertes aussagen, wie viele Paket verloren gegangen sind oder wiederholt wurden, Löschen der Fehlermeldung (540) und Aktualisieren des CB (520) mit einem Null-Versatz und einem Paketzähler, der auf den neu beobachteten Wert zurückgesetzt wurde.

4. Verfahren nach Anspruch 2 und 3, um des Weiteren Fehler zu analysieren, die erkannt werden, wenn die Fehlersituation im Schritt 1 von Anspruch 2 verlassen wird, um zwischen Paktinhaltsfehlern und Paketen, die außerhalb der Reihenfolge gesendet wurden, zu unterscheiden, wobei das Verfahren die folgenden Schritte umfasst:
a. Berücksichtigen aller Paketnummern, die während des Fehlerfensters gefunden wurden, um dadurch eine Menge von Folgenummern aufzuzeichnen, während eine Fehlersituation gemeldet wird;
b. Beobachten beim Verlassen des Fehlerfensters, ob die Folge ohne doppelte oder fehlende Nummer vollständig ist:
➢ wenn das der Fall ist, Feststellen, ob die Pakete außerhalb der Reihenfolge geliefert wurden;
➢ wenn das nicht der Fall ist, Feststellen, ob die Paketinhalte verändert wurden.

5. Vorrichtung (350) zum Erzeugen eines Prüffelds, das in einem verbindungsorientierten Datenübertragungsnetzwerk an Pakete fester Größe angefügt wird, die zum anschließenden Erkennen von Änderungen an dem Feld dient, das in den Paketen geschützt ist, wobei alle Eigenschaften, die mit dem bestimmten Erzeugerpolynom, das zum Ausführen einer zyklischen Redundanzprüfung CRC verwendet wird, verbunden sind, beibehalten werden, wobei die Möglichkeit hinzugefügt wird, innerhalb einer Folge dieser Pakete mit fester Größe, die zur gleichen Verbindung gehören, Paketfolgestörungen zu erkennen, wobei die Vorrichtung folgende Mittel umfasst:
a. ein Mittel (300) zum vorübergehenden Speichern eines ankommenden Pakets;
b. ein Mittel (320) zum Berechnen eines CRC-Prüffelds aus dem geschützten Feld des Pakets;
c. ein Mittel (310), um immer dann, wenn ein ankommendes Paket verarbeitet wird, einen nach Modulo betriebenen Zähler um einen Wert zu erhöhen, der nicht größer ist als zwei mit der Potenz, die dem Grad des zum Berechnen des CRC-Wertes verwendeten Erzeugerpolynoms entspricht;
d. ein Mittel (340) zum Hinzufügen von Modulo 2 des Wertes des Prüffelds zu dem Wert des erhöhenden Mittels (310), um dadurch das zusammengesetzte Prüffeld zu erhalten;
e. ein Mittel (330), um das zusammengesetzte Prüffeld, das an das ankommende Paket angefügt werden soll, vorübergehend zu speichern.

6. Vorrichtung (351) zum Prüfen eines Prüffelds, das in einem verbindungsorientierten Datenübertragungsnetzwerk an Pakete fester Größe angefügt wird, wodurch ermöglicht wird, Änderungen an dem Feld, das in den Paketen geschützt ist, und alle Paketfolgestörungen zu erkennen, wodurch ein Prüfergebnis und ein Versatz-Wert erhalten werden können, wobei die Vorrichtung die folgenden Mittel umfasst:
a. ein Mittel (301) zum vorübergehenden Speichern eines neuen Pakets;
b. ein Mittel (321) zum Berechnen eines Prüfergebnisses aus dem geschützten Feld des Pakets und dem zusammengesetzten Prüffeld;
c. ein Mittel (311), um immer dann, wenn ein neues Paket verarbeitet wird, einen nach Modulo betriebenen Zähler um einen Wert zu erhöhen, der nicht größer ist als zwei mit der Potenz, die dem Grad des Polynoms, das zum Berechnen des CRC-Wertes verwendet wird, entspricht;
d. ein Mittel (341) zum Vergleichen des Wertes des Prüfergebnisses mit dem Wert des Erhöhungsmittels (311), um dadurch einen Versatz-Wert zu erhalten;
e. ein Mittel (331), um den Versatz-Wert, von dem alle Fehlerbedingungen abgeleitet werden, vorübergehend zu speichern.

## Revendications

1. Procédé de génération d'un champ de contrôle (120) ajouté à des paquets de taille fixe (110) dans un réseau de communications de données orienté connexion permettant la détection ultérieure d'altérations du champ protégé dans ledit paquet, conservant toutes les propriétés associées au polynôme générateur particulier utilisé pour effectuer un contrôle de redondance cyclique, CRC, tout en ajoutant la capacité à détecter, dans une séquence de tels paquets de taille fixe se rapportant à la même connexion (230), des désordres de mise en séquence de paquets, ledit procédé comprenant l'étape consistant à :
a. effectuer, sur le champ à protéger de chaque paquet, un calcul de contrôle CRC (320), en obtenant ainsi une première valeur initiale pour le champ de contrôle à ajouter audit paquet,
ledit procédé étant **caractérisé en ce qu'**il comprend en outre les étapes consistant à :
b. incrémenter un compteur de connexion de paquets (310) pour chaque nouveau paquet traité, ledit compteur comptant modulo une valeur inférieure ou égale à 2^{N}, où N correspond au degré du polynôme générateur utilisé pour calculer ledit contrôle CRC,
c. modifier ladite première valeur initiale du champ de contrôle en ajoutant, modulo deux (340), la valeur actuelle dudit compteur de connexion de paquets en obtenant ainsi la valeur finale dudit champ de contrôle (330),
d. ajouter la valeur finale du champ de contrôle audit paquet.

2. Procédé de contrôle d'un champ de contrôle ajouté à des paquets de taille fixe dans un réseau de communications de données orienté connexion permettant de détecter des altérations du champ protégé dans ledit paquet et tous les désordres de mise en séquence de paquets, permettant d'obtenir un résultat de contrôle et un décalage, ledit procédé comprenant l'étape consistant à :
e. effectuer, sur le champ protégé de chaque paquet (301), y compris le champ de contrôle, un calcul de contrôle CRC (321), en obtenant ainsi un résultat de contrôle,
ledit procédé étant **caractérisé en ce qu'**il comprend en outre les étapes consistant à :
f. incrémenter un compteur de connexion de paquets (311) pour chaque nouveau paquet traité, ledit compteur comptant modulo une valeur inférieure ou égale à 2^{N}, où N correspond au degré du polynôme utilisé pour calculer ledit contrôle CRC,
g. comparer (341) ledit résultat de contrôle à la valeur actuelle dudit compteur de connexion de paquets, en obtenant ainsi un décalage (331), et
• si ledit décalage est nul :
déclarer que le contenu actuel dudit paquet n'a pas été altéré et que tous les paquets ont été reçus en séquence jusqu'à ce point,
• si ce n'est pas le cas :
déclarer immédiatement qu'une défaillance a été détectée pour la connexion actuelle.

3. Procédé selon la revendication 2, destiné en outre à déterminer le type des erreurs détectées, lorsqu'une situation d'erreur est rencontrée et la manière dont elle est éliminée sur la base de la seule observation dudit décalage obtenu sur des paquets successifs, ledit procédé comprenant les étapes consistant à :
h. mémoriser un bloc de contrôle CB (595) par connexion virtuelle conservant en mémoire les valeurs dudit compteur de paquets et dudit décalage,
i. récupérer (510) le bloc CB correspondant chaque fois qu'un nouveau paquet est reçu pour une connexion donnée,
j. incrémenter (515) le compteur de paquets de bloc CB,
k. comparer (530) le résultat du contrôle CRC effectué sur le nouveau paquet au résultat du compteur de paquets de bloc CB incrémenté,
1. s'ils correspondent :
signaler qu'aucune erreur ne s'est produite ou qu'une erreur vient juste de se terminer puis supprimer le signalement d'erreur (540) le cas échéant et de nouveau mémoriser le bloc CB (520) avec une nouvelle valeur de compteur de paquets et un décalage nul,
m. si ce n'est pas le cas :
contrôler (550) la valeur de décalage précédente du bloc CB :
➢ si elle est nulle, signaler (580) qu'un situation d'erreur vient juste d'être rencontrée et mémoriser de nouveau le bloc CB (520) avec la valeur de compteur de paquets incrémentée et le décalage,
➢ si ce n'est pas le cas, comparer (560) le décalage précédent du bloc CB et la valeur actuelle :
• s'ils sont différents, décider qu'une situation d'erreur est en cours, mémoriser de nouveau le bloc CB (520) avec les nouvelles valeurs (580) pour le compteur de paquets et le décalage,
• si cependant ils sont égaux (590), décider qu'une situation d'erreur vient juste d'être éliminée auquel cas le signe et la valeur du décalage indiquent combien de paquets ont été perdus ou répliqués, supprimer le signalement d'erreur (540) et mettre à jour le bloc CB (520) avec un décalage nul et un compteur de paquets réinitialisé à la nouvelle valeur observée.

4. Procédé selon les revendications 2 et 3, destiné en outre à analyser des erreurs détectées au moment de la sortie d'une situation d'erreur à l'étape 1 de la revendication 2, de manière à différencier des erreurs de contenu de paquet et des paquets qui sont délivrés en dehors de la séquence, ledit procédé comprenant les étapes consistant à :
a. conserver en mémoire tous les numéros de paquets trouvés au cours de la fenêtre d'erreur, en enregistrant ainsi un ensemble de numéros de séquence lorsqu'une situation d'erreur est signalée,
b. observer, au moment de la sortie de la fenêtre d'erreur, si la séquence est complète sans aucune duplication ni numéro manquant :
➢ si cela est vrai :
déclarer que les paquets ont été délivrés en dehors de la séquence,
➢ si cela est faux :
déclarer que le contenu des paquets a été altéré.

5. Dispositif (350) destiné à générer un champ de contrôle ajouté à des paquets de taille fixe dans un réseau de communications de données orienté connexion permettant la détection ultérieure d'altérations du champ protégé dans lesdits paquets, conservant toutes les propriétés associées au polynôme générateur particulier utilisé pour effectuer un contrôle de redondance cyclique, CRC, tout en ajoutant la capacité à détecter, dans une séquence de tels paquets de taille fixe se rapportant à la même connexion, des désordres de mise en séquence de paquets, ledit dispositif comprenant les moyens suivants :
a. un moyen (300) destiné à mémoriser temporairement un paquet entrant,
b. un moyen (320) destiné à calculer à partir du champ de paquet protégé, un champ de contrôle CRC,
c. un moyen (310) destiné à incrémenter, chaque fois qu'un paquet entrant est traité, un compteur fonctionnant modulo une valeur qui n'est pas inférieure à deux à la puissance du degré du polynôme générateur utilisé pour calculer ledit contrôle CRC,
d. un moyen (340) destiné à ajouter modulo 2 la valeur dudit champ de contrôle à la valeur dudit moyen d'incrémentation (310) en obtenant ainsi le champ de contrôle composite,
e. un moyen (330) destiné à mémoriser temporairement ledit champ de contrôle composite devant être ajouté audit paquet entrant.

6. Dispositif (351) destiné à contrôler un champ de contrôle ajouté à des paquets de taille fixe dans un réseau de communications de données orienté connexion permettant la détection ultérieure d'altérations du champ protégé dans lesdits paquets et de tous les désordres de mise en séquence de paquets, permettant d'obtenir un résultat de contrôle et un décalage, ledit dispositif comprenant les moyens suivants :
a. un moyen (301) destiné à mémoriser temporairement un nouveau paquet,
b. un moyen (321) destiné à calculer à partir du champ de paquet protégé et du champ de contrôle composite un résultat de contrôle,
c. un moyen (311) destiné à incrémenter, chaque fois qu'un nouveau paquet est traité, un compteur fonctionnant modulo une valeur qui n'est pas inférieure à deux à la puissance du degré du polynôme utilisé pour calculer ledit contrôle CRC,
d. un moyen (341) destiné à comparer la valeur dudit résultat de contrôle à la valeur dudit moyen d'incrémentation (311) en obtenant ainsi une valeur de décalage,
e. un moyen (331) destiné à mémoriser temporairement ledit décalage à partir duquel toutes les conditions d'erreurs sont déterminées.
